# DEMANDE DE BREVET EUROPEEN

(11) **EP 0 639 471 A1**
(43) Date de publication de la demande: **22.02.1995**
(21) Numéro de dépôt: 93480114.3
(22) Date de dépôt: 16.08.1993
(51) Int. Cl.: B60B 29/00

(54) **Outillage de manipulation de roue de véhicules lourds**

(71) Demandeur: Barbessol, André, F-83720 Trans en Provence (FR); Francon, Henri, F-83300 Draguignan (FR)
(72) Inventeur: Barbessol, André, F-83720 Trans en Provence (FR); Francon, Henri, F-83300 Draguignan (FR)
(74) Mandataire: Hautier, Jean-Louis

(57) **Abrégé**

L'invention concerne un outillage constitué d'un montant (4) possédant à sa partie inférieure une fourche munie de deux tiges (2) perpendiculaires et, éventuellement, de deux roues (22) destinées à former chariot. Une glissière (7) coulissant sur le montant (4) comporte perpendiculairement un porte-griffe (5) destiné à saisir le pneumatique en opposition avec les tiges (2) et un moyen de blocage (9) sur le montant (4). Une rallonge (1) se fixe sur ce dernier afin d'augmenter le bras de levier. Selon une variante, grâce à un crochet, elle facilite le positionnement de la roue par rapport au moyeu du véhicule.

Le dispositif selon l'invention est particulièrement destiné au dépannage des véhicules lourds.

## Description

La présente invention concerne un dispositif constitué d'un outillage destiné à la saisie, la manipulation et à la mise en place des roues de véhicules lourds.

Il facilite et simplifie les opérations de montage et de changement de roue : crevaison, changement de pneumatique,.....
Il peut être utilisé pour tout type de véhicule, aussi bien en atelier qu'en tout terrain.

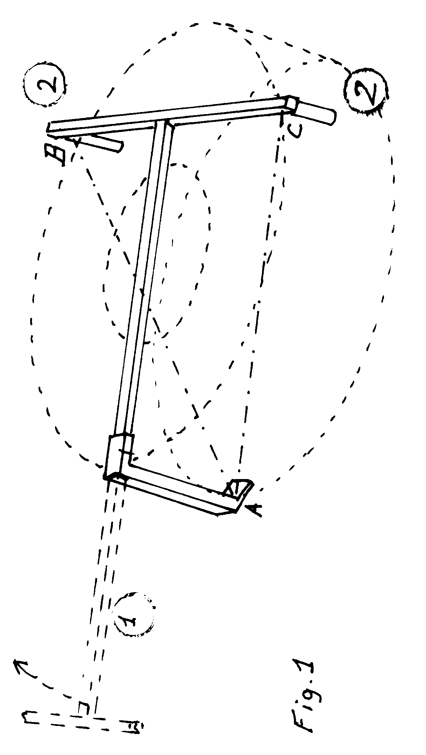

Dans ce qui va suivre, nous nous limiterons aux véhicules routiers et à l'utilisation de la roue de secours.
La roue est généralement fixée sous le châssis par un câble et deux goujons . Lors d'une crevaison, cette roue est descendue à terre, puis tirée hors véhicule, relevée et acheminée vers la roue crevée. Après que cette dernière ait été enlevée du moyeu, la roue de secours doit être positionnée par rapport aux goujons avant calage et serrage sur l'axe.
Les principales difficultés rencontrées sont :
a) efforts très importants pour tirer la roue hors de l'emprise du véhicule, ce qui est dû au poids de la roue, à l'adhérence du pneu sur le sol et à la mauvaise posture que l'on est obligé d'adopter
b) relevage de la roue difficile voire impossible pour certaines personnes : peu de prise sur les flancs lisses du pneu, poids important
c) positionnement de la roue sur l'axe et par rapport aux goujons, long et pénible en raison du poids et des difficultés de centrage.
Les conséquences sont très connues des professionnels
a) risques d'accidents du travail : tours de reins, hernies discales, etc...
b) perte de temps : généralement, le chauffeur se range, attend un autre collègue pour procéder au dépannage; quand il ne fait pas appel à un dépanneur professionnel
c) frais importants dans ce dernier cas
d) perte éventuelle du marché dans le cas de marchandises périssables, de livraison à horaire limité
e) report du déchargement d'une demi-journée si le chauffeur arrive à l'heure de fermeture des locaux du destinataire
f) salissures par le contact du pneu
e) fatigue importante suite aux efforts produits.
Le dispositif selon l'invention permet de remédier tout ou partie de ces divers inconvénients.Il est destiné à saisir, retourner, manipuler et positionner les roues de véhicules lourds et comporte à cet effet, selon une première caractéristique,
. un montant relié à sa partie inférieure à deux bras munis chacun
   . d'une tige perpendiculaire au plan formé par le montant et les bras
   . d'au moins, une roulette pour former chariot
. une glissière porte-griffe coulissant par rapport au montant et se verrouillant par un système quelconque de blocage; cette glissière porte-griffe permet de saisir la roue en opposition avec les tiges selon le plan ABC (figure 1)
. une rallonge augmentant le bras de levier, s'adaptant par l'une de ses extrémités au montant et possédant à l'autre un crochet destiné à en faire un levier de positionnement de la roue sur le moyeu du véhicule.

La glissière porte-griffe est composée d'un porte-griffe pouvant être réglable en longueur et d'une griffe.

Les éléments constitutifs du dispositif sont repliables de façon à réduire son encombrement hors utilisation.

Les roulettes sont fixées aux bras de telle façon qu'elles soient parallèles et que leur écartement soit, éventuellement, variable.

L'écartement des tiges et des roulettes se fait préférentiellement en fixant les tiges dans les trous correspondants. Selon une variante, l'écartement des roulettes est assuré par blocage d'une bague sur l'axe support roulettes par goupille ou tout autre moyen.

La rallonge comporte
. une extrémité emboîtable
. son autre extrémité reliée, éventuellement, à un crochet par une articulation
. un fourreau.

Selon les modes particuliers de réalisation du dispositif,
. ses éléments constitutifs ne sont pas repliables
. le montant n'est pas équipé de roulettes.

La figure 1 représente les principes de conception retenus.

La figure 2 présente le dispositif dans sa version la plus simple.

La figure 3 représente le dispositif dans l'une des versions repliables.

la figure 4 donne une solution de réglage de l'écartement des roulettes.

La figure 5 montre une solution de réglage de l'écartement des roulettes et des tiges.

Les figures 6 et 7 représentent d'autres conceptions de repliage du dispositif.

La figure 8 illustre la conception et l'utilisation de la rallonge.

La figure 9 représente une des solutions non repliables du dispositif.

Les principes de conception retenus et représentés par la figure 1 sont
. L'effort de levée se fait perpendiculairement au plan ABC
. la rallonge (1) démultiplie l'effort exercé
. les tiges (2) serviront de levier pour soulever la roue au moment de la positionner sur l'essieu du véhicule.

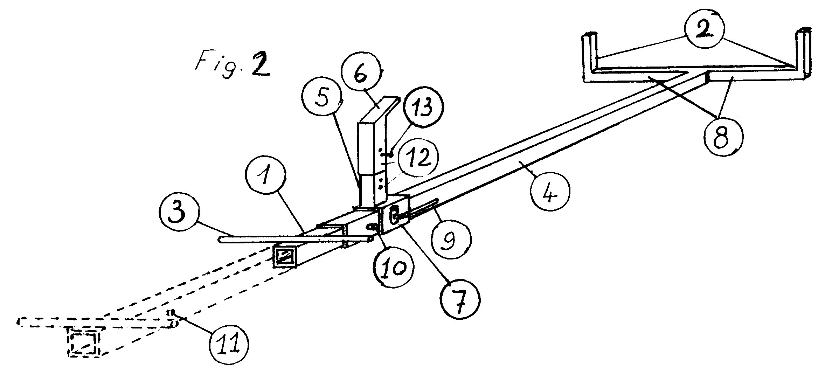

Le dispositif représenté par la figure 2 comporte
. un montant (4) relié à sa partie inférieure à deux bras (8) munis chacun d'une tige (2) perpendiculaire au plan formé par le montant (4) et les bras (8); il est doté à sa partie supérieur d'un verrou (10) permettant le blocage de la rallonge (1)
. une glissière porte-griffe (7) coulissant par rapport au montant (4) et se verrouillant par un système quelconque de blocage (9); elle est solidaire d'un porte-griffe (5) dont la griffe (6) peut être fixe ou réglable en longueur par l'intermédiaire des trous (12) et d'une goupille (13) ou d'un autre moyen.
. une rallonge (1) équipée d'une barre-poignée (3) et de deux emplacements (11) (dont l'un est masqué sur la figure) destinés au verrouillage de la rallonge (1) en positions pliée et dépliée.

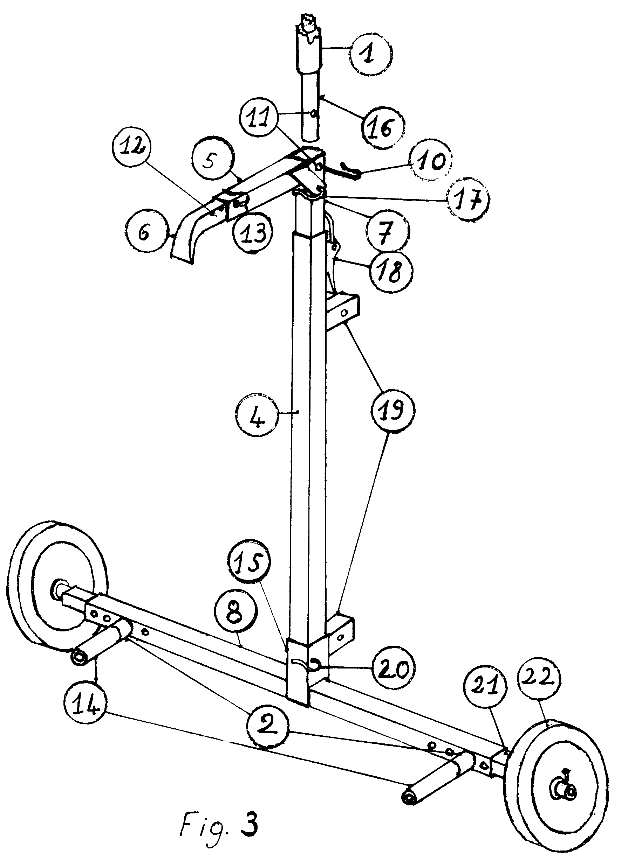

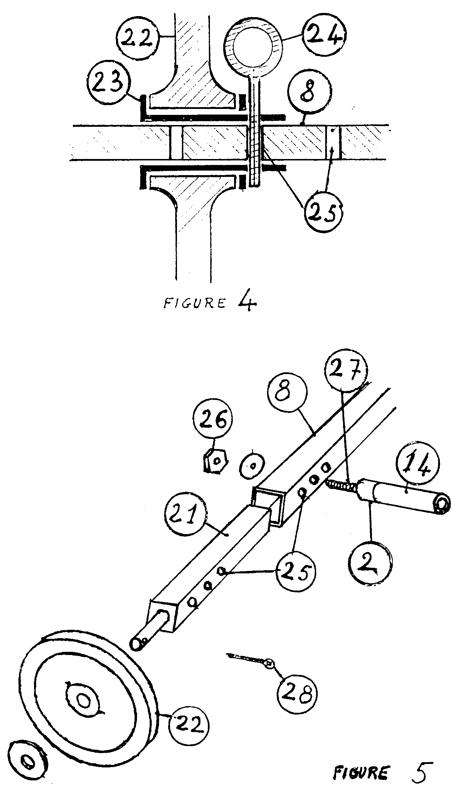

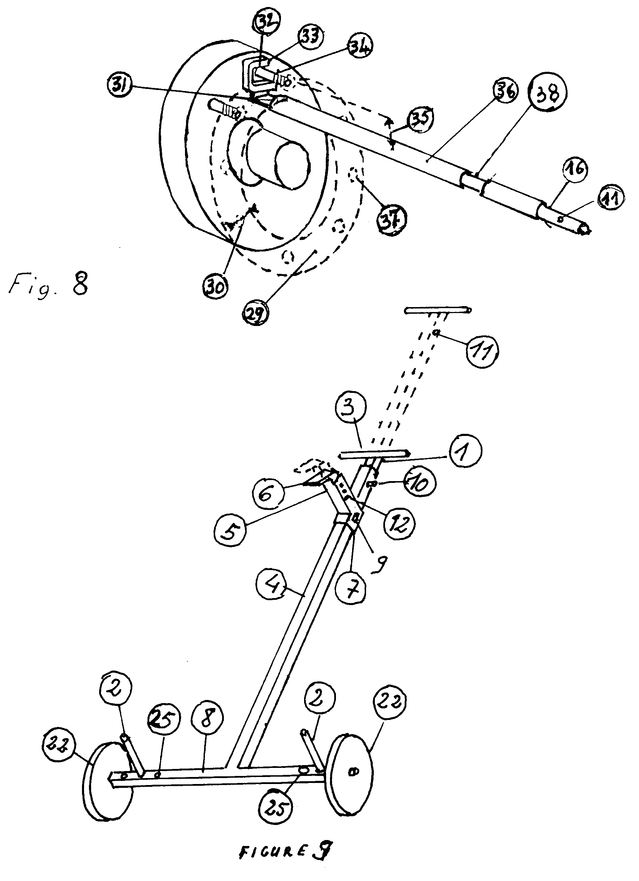

Le dispositif représenté par la figure 3 comporte
. le montant (4) dont
   . le pied est perforé pour recevoir la goupille d'assemblage (20) avec le bras (8)
   . le haut est équipé d'un blocage de la glissière (18) et d'un ancrage de la rallonge (19)
. le bras (8) est doté
   . de deux roulettes (22)
   . de deux tiges (2) avec, éventuellement, chacune un galet (14); leur écartement peut être réglable par l'un des dispositifs illustrés en figures 4 et 5
   . d'un logement (15) destiné à recevoir le pied du montant (4)
   . d'un ancrage de la rallonge (19)
. la glissière porte-griffe (7) comportant
   . un tube coulissant à l'intérieur du montant (4)
   . le porte-griffe (5) articulé sur le tube ci-dessus par l'intermédiaire de la goupille (17) ou tout autre moyen
. la rallonge (1) dont le détail fait l'objet de la figure 8; son verrouillage sur le montant (4) s'opère en glissant la goupille faisant office de verrou (10) dans les emplacements (11).

La figure 4 représente une solution de réglage de l'écartement des roulettes, elle comporte le bras (8), une bague (23), la roulette (22)
. Le bras (8) comporte des trous de réglage (25).
. La bague (23) possède un trou destiné à recevoir la goupille (24) qui sert à bloquer l'ensemble roulette (22)/bague (23) sur le bras (8) . Le trou utilisé (25) donnera l'écartement des roulettes (22).

La figure 5 représente une solution permettant le réglage de l'écartement des roulettes (22) et des tiges (2); elle comprend le bras (8), l'axe support de roulette (21), la roulette (22) et la tige (2)
. Le bras (8) comporte des trous (25) .
. L'axe support de roulette (21 est de section telle qu'il coulisse à l'intérieur du bras (8) . Il est également troué .

L'alignement des trous (25) de l'axe support de roulettes (21) et du bras (8) déterminera l'écartement des roulettes (22).
. La tige (2) a, ici, une partie filetée (27), sa fixation se fait par écrou (26). L'assemblage de la tige (2) sur le bras (8) peut se faire par tout autre moyen. La multiplicité des trous (25) permet de régler l'écartement des tiges (2).

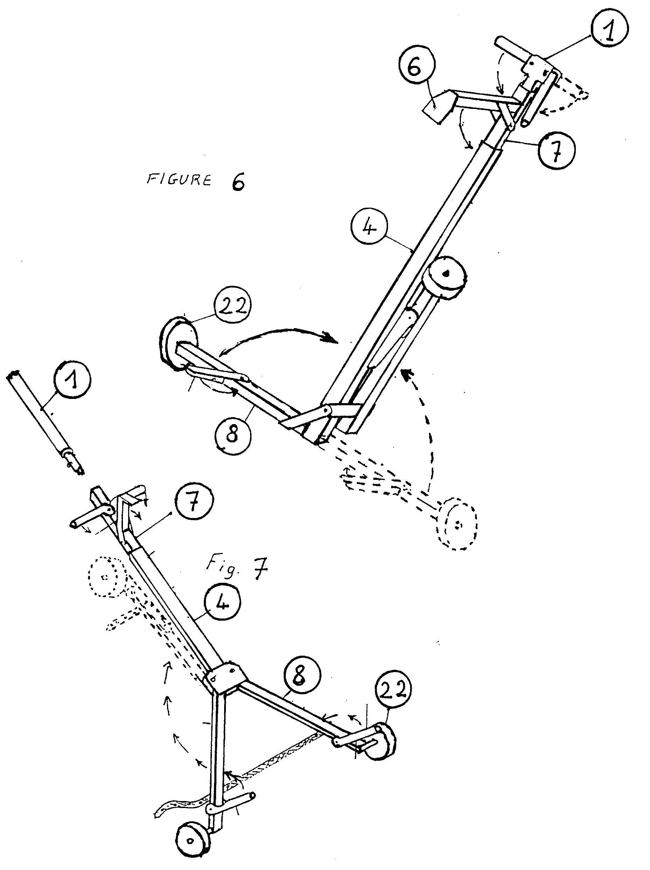

Les dispositifs représentés par les figures 6 et 7 sont des variantes du modèle exposé en figure 3 et donnent à titre d'exemples d'autres modes de repliage des éléments constitutifs.

Toute autre combinaison d'assemblages et d'articulations pourrait être envisagée.

La rallonge (1) représentée sur la figure 8 est constituée d'un barreau (38) et d'un fourreau (36) :
. le barreau (38) comporte
   . une extrémité (16) de section telle qu'elle puisse s'emboîter sur le montant (4) du dispositif; l'emplacement (11) sert au verrouillage de la rallonge (1) sur le montant (4)
   . une extrémité reliée ,éventuellement, à un crochet (33) par une articulation (31) pouvant être semi flexible tel que tresse métallique ou articulation type genouillère . Cette articulation (31) peut être réglable en longueur .
. le fourreau (36) est libre en rotation et en translation
A noter que la distance (35) entre le dessus du fourreau (36) et la face d'appui (32) du crochet (33) est égale à la distance (30) entre le cercle intérieur du voile de la jante (29) et le bord extérieur des trous de fixation (37) de cette dernière.
L'épaisseur du crochet (33) est telle, que la roue légèrement engagée sur les goujons (34) et maintenue par les écrous vissés de quelques filets, il est possible de le dégager facilement du goujon sur lequel il a été accroché.

Le dispositif représenté par la figure 9 est l'un des modèles dont les éléments constitutifs ne sont pas repliables. Le même principe peut être appliqué pour les autres dispositifs repliables : figures 6, 7 ou autres.

### Mode d'utilisation

Compte-tenu de la variété des modèles, il ne sera exposé, ci-après, que l'utilisation du dispositif figure 3

### . a) relevage d'une roue de véhicule lourd reposant sur le sol:

. écarter suffisamment le porte-griffe (5).
. poser le dispositif sur la roue à relever, griffe (6) et tiges (2) tournées vers le sol
. repousser le porte-griffe (5) jusqu'à bien enserrer la roue entre tiges (2) et griffe (6) et le fixer avec le système de blocage du porte-griffe (18).
. emboîter la rallonge (1) dans le montant (4)
. soulever la roue en relevant la rallonge
. pour libérer la roue, faire les mêmes opérations dans l'ordre inverse.

### . b) relevage et inversion de la face de la roue à présenter sur le moyeu :

. relever la roue comme ci-dessus
. la faire tomber au sol sur l'autre face
. la relever comme expliqué ci-dessus.

### . c) manutention des roues de secours des véhicules lourds arrimées sous ces derniers par un câble :

. écarter suffisamment le porte-griffe (5).
. positionner le chariot à plat sur le sol, tiges (2) en l'air, à la verticale de la roue.
. descendre la roue sur le chariot.
. enserrer la roue entre le porte-griffe (5) et les tiges (2).
. bloquer le porte-griffe à l'aide du système de blocage (18).
. tirer le chariot de dessous du véhicule.
. le relevage et la libération de la roue se font comme ci-dessus.

### . d) positionnement de la roue sur le moyeu du véhicule :

. positionner la roue en face du moyeu, tiges (2) glissées sous la roue
. dégager la griffe (6)
. faire levier de façon à ce que la roue puisse s'engager sur le moyeu; le cas échéant, s'aider en engageant la rallonge (1) dans l'un des ancrages (19)
. engager la roue sur le moyeu et la libérer.

### . e) utilisation de la rallonge (1) comme levier de positionnement :

. placer verticalement la roue à monter , en face du moyeu
. passer la rallonge (1) à travers du vide de la jante (29), crochet (33) en avant
. crocheter le goujon supérieur (34), le fourreau (36) étant poussé à fond en avant
. soulever la roue en relevant la rallonge (1) La roue se trouve pratiquement centrée par rapport au moyeu
. faire tourner soit la roue, soit le fourreau (36), jusqu'à ce que les trous (37) de la jante (29) se trouvent en face des goujons (34)
. engager la roue sur les goujons (34)
. visser de quelques filets l'écrou de l'un des goujons pour maintenir la roue
. dégager le crochet (33) du goujon (34) en baissant la rallonge (1) et en la tournant
. sortir la rallonge (1) en faisant passer le crochet (33) entre le moyeu et le bord intérieur de la jante (29).

Le dispositif selon l'invention est particulièrement destiné à la manipulation de roue de tout type de véhicule lourd en ou hors atelier

## Revendications

1. Dispositif destiné à saisir, retourner, manipuler et positionner les roues de véhicules lourds constitué par :
. un montant (4) relié à sa partie inférieure à deux bras (8) munis chacun
. d'une tige (2) perpendiculaire au plan formé par le montant (4) et les bras (8)
. et, préférentiellement, d'au moins, une roulette (22) pour former chariot
caractérisé en ce qu'il comporte :
. une glissière porte-griffe (7) coulissant par rapport au montant (4) et se verrouillant par un système quelconque de blocage (9); cette glissière porte-griffe (7) permet de saisir la roue en opposition avec les tiges (2) selon le plan ABC (figure 1)
. une rallonge (1) augmentant le bras de levier, s'adaptant par l'une de ses extrémités (16) au montant (4) et possèdant à l'autre un crochet (33) destiné à en faire un levier de positionnement de la roue sur le moyeu du véhicule

2. Dispositif selon la revendication 1 caractérisé en ce que la glissière porte-griffe (7) est composée d'un porte-griffe (5) pouvant être réglable en longueur et d'une griffe (6)

3. Dispositif selon la revendication 1 caractérisé en ce que ses éléments constitutifs sont repliables de façon à réduire l'encombrement du dispositif hors utilisation

4. Dispositif selon la revendication 1 caractérisé en ce que les roulettes (22) sont fixées aux bras (8) de telle façon qu'elles soient parallèles et que leur écartement soit, éventuellement, variable

5. Dispositif selon la revendication 1 caractérisé en ce que l'écartement des tiges (2) et des roulettes (22) se fait préférentiellement en fixant les tiges (2) dans les trous correspondants (25)

6. Dispositif selon la revendication 1 caractérisé en ce que , dans une variante, l'écartement des roulettes (22) est assuré par blocage d'une bague (23) sur l'axe support roulettes (21)

7. Dispositif selon la revendication 1 caractérisé en ce que la rallonge (1) comporte
. une extrémité emboîtable (16)
. son autre extrémité reliée à un crochet (33) par une articulation (31)
. un fourreau (36)

8. Dispositif selon la revendication 1 caractérisé en ce que ses éléments constitutifs ne sont pas repliables
